# EUROPÄISCHE PATENTANMELDUNG

(11) **EP 2 053 726 A2**
(43) Veröffentlichungstag der Anmeldung: **29.04.2009**
(21) Anmeldenummer: 08105615.2
(22) Anmeldetag: 21.10.2008
(51) Int. Cl.: H02K 11/00, H02K 5/02

(54) **Entstörvorrichtung für das Kommutierungssystem eines Gleichstrommotors**

(30) Priorität: 26.10.2007 DE 102007051251
(71) Anmelder: Robert Bosch GmbH, 70442 Stuttgart (DE)
(72) Erfinder: Niederer, Armin, 76137, Karlsruhe (DE); Kuechen, Tobias, 79312, Emmendingen (DE)

(57) **Zusammenfassung**

Die Erfindung betrifft eine Entstörvorrichtung für das Kommutierungssystem eines Gleichstrommotors (10) mit einer Entstörschaltung (24), welche unbedrahtete, insbesondere SMD-Bauteile auf einer Leiterplatte (25) aufweist. Hierbei sind wenigstens zwei Keramikkondensatoren (30 bis 36) parallel jeweils zwischen eine Anschlussleitung (20,22) des Motors (10) und Masse (26) geschaltet, wodurch im Regelfall ohne zusätzliche weitere Entstörbauelemente (38;54,56) eine ausreichend gute und dauerhaft sichere Entstörung bei kompakter Bauweise und niedrigen Kosten erreicht wird.

## Beschreibung

### Stand der Technik

Die Erfindung geht aus von einer Entstörvorrichtung nach der Gattung des unabhängigen Anspruchs. Hierzu ist aus der DE 103 18 734 A1 eine elektrische Maschine mit einer separaten Entstörleiterplatte bekannt, welche mit SMD- Bauteilen zur Dämpfung von elektrische Störungen bestückt ist. Die Veröffentlichung beschäftigt sich mit der Gestaltung und Befestigung der Entstörleiterplatte.

Weiterhin ist aus der DE 10 2004 037 912 A1 ein Elektromotor mit Entstörung bekannt, bei dem innerhalb des Motorgehäuses ein X2Y-Keramikfilter zur Führung des Elektromotors angeordnet ist. Hierbei sind zwei Cy-Kondensatoren zwischen die Anschlussleitungen zu einer Gleichspannungsquelle und Masse und ein weiterer Cx-Kondensator zwischen die Anschlussleitungen geschaltet. Dies entspricht einer herkömmlichen Entstörschaltung, welche entsprechend diesem Vorschlag in Form einer X2Y-Hybridanordnung ausgeführt ist, sodass ein kompaktes Entstörbauelement im Elektromotor nahe der Störquelle und baulich direkt an der durch das Polgehäuse des Motors gebildeten Masse angebracht werden kann.

### Offenbarung der Erfindung

Die erfindungsgemäße Entstörvorrichtung mit den Merkmalen des unabhängigen Anspruchs hat den Vorteil, dass durch die Parallelschaltung von zwei Cy-Keramikkondensatoren ein deutlicher Dämpfungszugewinn sowohl hinsichtlich der leitungsgebundenen wie auch hinsichtlich der abgestrahlten Entstörung erreicht wird. Kleine Bauformen von SMD-Keramikkondensatoren haben eine kleinere Impedanz und dadurch eine bessere Entstörwirkung. Die gesamte Entstörschaltung kann hierbei als Hybridschaltung in Form einer integrierten Schichtschaltung mit zusätzlichen diskreten Bauelementen, vorzugsweise auf einer Multilayer-Leiterplatte, ausgebildet werden.

Durch die in den abhängigen Ansprüchen aufgeführten Maßnahmen sind vorteilhafte Weiterbildungen und Verbesserungen der im unabhängigen Anspruch angegebenen Vorrichtung möglich.

Besonders vorteilhaft hinsichtlich der räumlichen Gestaltung der erfindungsgemäßen Vorrichtung ist die Verwendung von SMD-Kondensatoren, welche auf Leiterbahnen einer Leiterplatte angeordnet sind. Diese lassen sich sehr einfach und dauerhaft auf der Leiterplatte befestigen und reduzieren so den Fertigungsaufwand der Vorrichtung.

Eine betriebssichere Entstörvorrichtung hinsichtlich mechanischer Beanspruchungen, wie sie in Kraftfahrzeugen auftreten, erhält man, wenn die Kondensatoren zueinander unter einem Winkel von jeweils etwa 90° auf der Leiterplatte angeordnet sind. Diese Anordnung bietet einen besonderen Schutz gegen die Folgen eines möglichen Bruchs einzelner Keramikkondensatoren, weil dieser dann keinen Kurzschluss verursacht.

Weiterhin ist es zweckmäßig, wenn die Leiterbahnen zwischen den Kondensatoren und Masse so ausgebildet sind, dass sich eine impedanzarme und symmetrische Kontaktierung des virtuellen Massepotentials in Form des Polgehäuses des Motors ergibt. Zumindest für den Fall, dass an den Entstörungsgrat des Motors nicht höchste Ansprüche gestellt werden, kann dann auf den Einsatz von Entstördrosseln verzichtet werden. Andererseits ist es möglich, durch den zusätzlichen Einsatz von Entstördrosseln, insbesondere im Frequenzbereich zwischen etwa 30 MHz und 500 MHz, die Entstörwirkung noch weiter zu verbessern. Bei hohen Anforderungen an den Entstörungsgrad ist es weiterhin vorteilhaft, in grundsätzlich bekannter Weise wenigstens einen weiteren Keramikkondensator zwischen die Anschlussleitungen des Motors zu schalten. Ein derartiger, sogenannter Cx-Kondensator ist insbesondere wirksam gegen niederfrequente Störungsanteile im Bereich zwischen etwa 150 kHz und 50 MHz, während die erfindungsgemäß vorgeschlagenen Kondensatoren jeweils zwischen einer Anschlussleitung und einer virtuellen Masse des Motors insbesondere im hochfrequenten Störungsbereich zwischen etwa 70 MHz und 2 GHz wirksam sind.

Die erfindungsgemäß anzuordnenden Kondensatoren können als diskrete Bauelemente ausgeführt sein, vorzugsweise werden jedoch SMD-Keramikkondensatoren verwendet, insbesondere sogenannten X2Y-Bauelemente, welche in bekannter Weise zwei Cy-Kondensatoren für den Anschluss zwischen den Zuleitungen des Motors und Masse und einen Cx-Kondensator zum Anschluss zwischen den Zuleitungen des Motors enthalten. Diese Bauelemente sind beispielsweise in der eingangs erwähnten DE 10 2004 037 912 A1 detailliert beschrieben.

Der Masseanschluss der Entstörschaltung wird als virtuelle Masse, vorzugsweise durch das Polgehäuse der Maschine gebildet, welches ausreichend großflächig und voluminös ausgebildet ist zur sicheren Ableitung der HF-Störströme. Hierbei ist es wichtig, dass auch die Zuleitung zum Polgehäuse möglichst impedanzarm ausgeführt wird, wobei zusätzlich ein Symmetrieausgleich entsprechend der räumlichen Störungsverteilung am Motor erfolgen kann, indem die räumliche Verteilung der Störungen empirisch ermittelt und durch die Wahl der Kapazitäten der einzelnen Kondensatoren zusätzlich symmetriert wird.

### Kurze Beschreibung der Zeichnungen

Ein Ausführungsbeispiel der Erfindung ist in den Zeichnungen dargestellt und in der nachfolgenden Beschreibung näher erläutert.

### Es zeigen:

- Figur 1: ein Schaltschema der erfindungsgemäßen Entstörvorrichtung für einen Kommutatormotor und
- Figur 2: einen Ausschnitt aus der Leiterplatte einer erfindungsgemäßen Entstörvorrichtung mit der Darstellung der Anordnung der einzelnen Kondensatoren und ihrer Anschlussleitungen.

### Ausführungsform der Erfindung

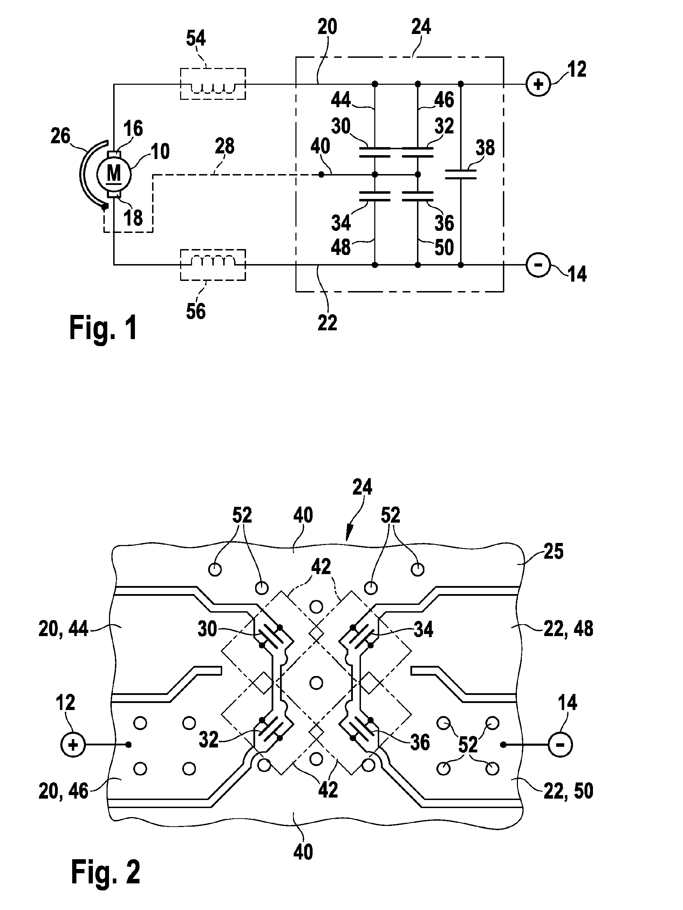

In der Figur 1 ist eine Entstörvorrichtung für das Kommutierungssystem eines Gleichstrommotors 10 dargestellt, welcher aus einem Gleichspannungsnetz mit einem Pluspol 12 und einem Minuspol 14 gespeist wird. Die Polung kann zur Drehrichtungsumkehr vertauscht werden. Hierbei liegt jeweils eine Bürste 16,18 über eine Anschlussleitung 20, 22 am Pluspol 12 und am Minuspol 14 der Gleichspannungsquelle. Das Polgehäuse ist mit 26 bezeichnet und als virtueller Masseanschluss der Entstörschaltung 24 über eine impedanzarme elektrische Verbindung 28, beispielsweise über ein Flachbandkabel, mit einer Leiterbahn 40 der Entstörschaltung 24 verbunden. Sofern ein metallisches Polgehäuse am Gleichstrommotor 10 nicht zur Verfügung steht kann eine virtuelle Masse auch durch eine metallische Abschirmung am Polgehäuse gebildet werden, welche dann anstelle des Polgehäuses 26 über die elektrische Verbindung 28 mit der Entstörschaltung 24 verbunden ist. Wichtig ist, dass der Masseanschluss als virtuelle Masse ausgebildet ist, welche weder mit dem Pluspol 12 noch mit dem Minuspol 14 der Gleichspannungsquelle in Verbindung steht.

Die Entstörschaltung 24 wird im Wesentlichen gebildet durch zwei Cy-Kondensatoren 30 und 32 zwischen der Leiterbahn 40 und der Anschlussleitung 20 sowie durch zwei Cy-Kondensatoren 34 und 36 zwischen der Leiterbahn 40 und der Anschlussleitung 22 des Gleichspannungsnetzes. Diese Cy-Kondensatoren 30 bis 36 haben üblicherweise eine Kapazität unter 10 nF und sind durch ihre Ausführung als Keramikkondensatoren, insbesondere in der Form von räumlich klein ausgebildeten SMD-Bauelementen, geeignet für die Entstörung im Bereich hoher Frequenzen oberhalb etwa 80 MHz. Die Anordnung eines weiteren Cx-Kondensators 38 zwischen den Anschlussleitungen 20 und 22 ist nicht zwingend erforderlich, insbesondere dann nicht, wenn der Gleichstrommotor 10 aufgrund seiner Bauform im Bereich niedriger Frequenz unter etwa 80 MHz nur geringe Störungen verursacht. Sofern motorbedingt niederfrequente Störungen im Bereich unter 80 MHz auftreten, kann auf den Cx-Kondensator 38 verzichtet werden, wenn die Cy-Kondensatoren 30 bis 36 mit deutlich höherer Kapazität von cirka 100-300 nF ausgeführt werden und dann aufgrund ihrer Zusammenschaltung an der Masse-Leiterbahn 40 die Funktion des Cx-Kondensators übernehmen.

Die Kondensatoren 30 bis 38 sind vorzugsweise als Streifenleiter-Bauelemente ausgebildet. Sofern ein zusätzlicher Cx-Kondensator 38 in die Entstörschaltung 24 integriert werden soll, können Hybrid-Bauelemente in der bekannten Ausführung als X2Y-Kondensatoren eingesetzt werden, wie sie in der eingangs zum Stand der Technik erwähnten DE 10 2004 037 912 A1 beschrieben und auf dem Markt erhältlich sind.

Figur 2 zeigt einen Ausschnitt aus einer Leiterplatte 25 mit der Entstörschaltung 24, wobei die Cy-Kondensatoren 30 bis 34 in ihrer räumlichen Anordnung unter einem Winkel von jeweils etwa 90° zueinander zu erkennen sind. Die Keramikkondensatoren sind auf Streifenleitern 42 angeordnet und einerseits über die schichtförmig auf der Leiterplatte 25 ausgebildete Leiterbahn 40 mit der virtuellen Masse, im Ausführungsbeispiel mit dem metallischen Polgehäuse 26 verbunden. Als virtuelle Masse können jedoch auch eine Metallisierung auf einem aus Isolierstoff gefertigten Polgehäuse 26 oder eine Massefläche auf der Leiterplatte 25, beispielsweise eine auf deren Rückseite aufgebrachte Metallisierung, dienen.

Die Verbindungen zwischen den Kondensatoren 30 bis 36 und den Leiterbahnen 20, 22 sind ebenfalls als Leiterbahnen ausgebildet und mit 44, 46, 48 und 50 bezeichnet. Weiterhin sind Durchkontaktierungen 52 in der Ausführung als Vias zu erkennen, welche die in Figur 2 dargestellte Oberfläche der Leiterplatte 25 mit der Entstörschaltung 24 mit der Rückseite der Leiterplatte verbinden. Die Anordnung der Kondensatoren zueinander unter einem Winkel von jeweils etwa 90° stellt sicher, dass bei einem Bruch durch Verbiegen der Leiterplatte die Kondensatoren 30 bis 36 nur paarweise beschädigt und kurzgeschlossen werden können, so dass die Funktion der parallel liegenden Kondensatoren und der Entstörschaltung auch bei einem Keramikbruch erhalten bleibt. Die Leiterbahnen 40 und 44 bis 50 zwischen den Kondensatoren und den zugehörigen Anschlüssen sind symmetrisch ausgebildet, um eine gleichförmige Entstörwirkung sicherzustellen. Die Streifen zwischen den Leiterbahnen sind elektrisch nicht leitend und bilden die Potentialtrennung.

Die in Figur 1 gestrichelt dargestellten Entstördrosseln 54 und 56 in den Anschlussleitungen 20 und 22 stellen optionale Entstörmittel dar, welche bei besonders hohen Ansprüchen an den Entstörgrad zusätzlich eingefügt werden können. Sie dienen insbesondere der Entstörung in einem Frequenzbereich zwischen etwa 30 MHz und 500 MHz. Insofern ergänzen sie vorteilhaft die durch die Entstörschaltung 24 gebildete Entstörvorrichtung.

Zusammenfassend kann festgestellt werden, dass durch die erfindungsgemäße Entstörvorrichtung mit niedrigen Kosten eine dauerhaft sichere Entstörung gewährleistet wird, wobei induktive Entstörelemente nur in Ausnahmefällen bei sehr hohen Anforderungen an die Entstörwirkung notwendig sind. Als Entstörkondensatoren können Standard-Keramikbauformen verwendet werden, welche preiswert im Handel erhältlich sind und in den dargestellten Varianten ohne Schwierigkeiten kombiniert werden können. Zusätzlich wird die Anzahl der zu verdrahtenden Bauelemente im Motor deutlich verringert und hinsichtlich der Konstruktion der Bürstenhalter ergeben sich Freiheitsgrade, welche ebenfalls die Herstellungskosten des Motors reduzieren können.

## Patentansprüche

1. Entstörvorrichtung für das Kommutierungssystem eines Gleichstrommotors, welche unbedrahtete, insbesondere SMD-Bauteile auf einer Leiterplatte (25) aufweist, **dadurch gekennzeichnet, dass** in einer Entstörschaltung (24) wenigstens zwei Keramikkondensatoren (30 bis 36) parallel jeweils zwischen eine Anschlussleitung (20,22) des Motors (10) und Masse (26) geschaltet sind.

2. Entstörvorrichtung nach Anspruch 1, **dadurch gekennzeichnet, dass** die Kondensatoren (30 bis 36) als SMD-Keramikkondensatoren auf Streifenleitern (42) ausgebildet sind.

3. Entstörvorrichtung nach Anspruch 1 oder 2, **dadurch gekennzeichnet, dass** die Kondensatoren (30 bis 36) zueinander unter einem Winkel von jeweils etwa 90° auf der Leiterplatte (25) angeordnet sind.

4. Entstörvorrichtung nach einem der vorhergehenden Ansprüche, **dadurch gekennzeichnet, dass** die Leiterbahnen (44 bis 50) zwischen den Kondensatoren (30 bis 36) und ihren Anschlüssen (20,22) symmetrisch ausgebildet sind.

5. Entstörvorrichtung nach einem der vorhergehenden Ansprüche, **dadurch gekennzeichnet, dass** wenigstens ein weiterer Keramikkondensator (38) zwischen die Anschlussleitungen (20,22) des Motors (10) geschaltet ist.

6. Entstörvorrichtung nach einem der vorhergehenden Ansprüche, **dadurch gekennzeichnet, dass** in den Anschlussleitungen (20,22) des Motors (10) je eine Entstördrossel (54,56) angeordnet ist.

7. Entstörvorrichtung nach einem der vorhergehenden Ansprüche, **dadurch gekennzeichnet, dass** die Masse der Entstörschaltung (24) als virtuelle Masse ausgebildet ist.

8. Entstörvorrichtung nach Anspruch 7, **dadurch gekennzeichnet, dass** als virtuelle Masse der Entstörschaltung (24) das Polgehäuse (26) der Maschine dient.

9. Entstörvorrichtung nach Anspruch 7, **dadurch gekennzeichnet, dass** als virtuelle Masse der Entstörschaltung (24) eine Metallisierung eines aus Isolierstoff bestehenden Polgehäuses (26) der Maschine dient.

10. Entstörvorrichtung nach Anspruch 7, **dadurch gekennzeichnet, dass** als virtuelle Masse der Entstörschaltung (24) eine metallisierte Fläche auf der Leiterplatte (25) dient.
